# FASCICULE DE BREVET EUROPEEN

(11) **EP 4 077 977 B1**
(45) Date de publication et mention de la délivrance du brevet: **29.11.2023**
(21) Numéro de dépôt: 20841993.7
(22) Date de dépôt: 07.12.2020
(51) Int. Cl.: F16H 61/4035, F16H 61/4061, F16H 61/4148, F16H 61/44

(54) **SYSTÈME D'ASSISTANCE HYDRAULIQUE OUVERT AMÉLIORÉ**
VERBESSERTES OFFENES HYDRAULISCHES HILFSSYSTEM
IMPROVED OPEN HYDRAULIC ASSISTANCE SYSTEM

(30) Priorité: 20.12.2019 FR 1915123
(43) Date de publication de la demande: 26.10.2022
(73) Titulaire: Poclain Hydraulics Industrie, 60410 Verberie (FR)
(72) Inventeur: D'HERSIGNERIE, Cyrille, 60410 Verberie (FR); TAXIL, Loris, 60410 Verberie (FR); PATTE, Christophe, 60410 Verberie (FR)
(74) Mandataire: Cabinet Beau de Loménie
(86) Numéro de dépôt international: PCT/FR2020/052320
(87) Numéro de publication internationale: WO 2021/123560

(56) Documents cités:
- DE-A1- 19 746 090
- FR-A1- 3 057 845
- US-A- 3 900 075
- US-A1- 2013 000 293

## Description

### Domaine Technique

La présente invention concerne le domaine des circuits d'assistance à l'entrainement de véhicules.

### Technique antérieure

On connait les systèmes permettant de réaliser un système d'assistance de véhicule avec un circuit hydraulique de type ouvert, c'est-à-dire dans lequel une pompe hydraulique réalisant une alimentation du circuit hydraulique prélève du fluide, typiquement de l'huile, dans un réservoir, et dans lequel le refoulement d'huile en sortie du circuit hydraulique est déversé dans le réservoir, par opposition aux circuits hydrauliques de type fermé dans lesquels le refoulement d'huile retourne à l'admission de la pompe hydraulique. Des roues non motrices d'un véhicule, ou des roues d'un attelage ou d'une remorque peuvent ainsi être sélectivement entrainées par le système d'assistance, par exemple pour des conditions spécifiques ou pour le franchissement d'obstacles.

Les documents FR3057829A, FR3057843A, FR3057844A et FR3057845A (ce dernier formant la base pour le préambule de la revendication 1) au nom de la demanderesse présentent ainsi différentes structures de circuits d'assistance.

Ces différents circuits emploient une valve à centre ouvert, permettant d'optimiser la séquence de désengagement du système d'assistance. La pompe hydraulique employée dans de tels circuits est à cylindrée variable en fonction de la charge. Toutefois, une problématique récurrente avec de tels circuits concernent le désengagement des moteurs hydrauliques d'assistance, et notamment la rétractation des pistons dans leurs cylindres respectifs lorsque l'assistance hydraulique n'est pas sollicitée. Or, une telle fonction nécessite d'isoler les moteurs hydrauliques, que ce soit avec une valve à centre ouvert ou fermé.

Les valves à centre ouvert présentent cependant un inconvénient en ce que lorsque le système est au repos, c'est-à-dire lorsque l'assistance hydraulique n'est pas sollicitée, la pompe hydraulique délivre alors un débit dans le réservoir, et va donc monter en cylindrée en essayant de générer une montée en pression, sans y parvenir. A l'inverse, dans le cas d'une valve à centre fermée, la pompe hydraulique va alors réduire sa cylindrée au minimum lorsque le système est au repos, mais elle ne permettra alors pas de rétracter les pistons des moteurs hydrauliques.

### Exposé de l'invention

Le présent exposé vise ainsi à répondre au moins partiellement à ces problématiques, et propose un système d'assistance à l'entrainement d'un véhicule muni d'un circuit hydraulique ouvert comprenant une pompe hydraulique, un moteur hydraulique et un réservoir, le circuit hydraulique comprenant un conduit d'admission reliant le réservoir à la pompe hydraulique, un conduit d'alimentation reliant la pompe hydraulique au moteur hydraulique, et un conduit de retour reliant le moteur hydraulique au réservoir,
ledit système comprenant un distributeur trois positions relié au conduit d'alimentation et au conduit de retour, adapté pour, dans une première position assurer l'alimentation du moteur hydraulique dans un premier sens de fonctionnement, dans une seconde position isoler fluidiquement le moteur hydraulique de la pompe hydraulique et relier le moteur hydraulique au réservoir, et dans une troisième position assurer l'alimentation du moteur hydraulique dans un second sens de fonctionnement opposé au premier sens de fonctionnement, ledit système étant caractérisé en ce que
la pompe hydraulique est une pompe hydraulique à cylindrée variable, unidirectionnelle, à commande de cylindrée asservie à une consigne de pression le système comprend un variateur de débit positionné sur le conduit d'alimentation, entre la pompe hydraulique et le distributeur trois positions, ledit variateur de débit étant configuré de manière à dans une première configuration empêcher un passage de fluide dans le conduit d'alimentation de la pompe hydraulique vers le distributeur trois positions de manière à ce que la cylindrée de la pompe hydraulique tende vers zéro ou soit nulle, et dans une seconde configuration, permettre un passage de fluide dans le conduit d'alimentation de la pompe hydraulique vers le distributeur trois positions.

La pompe hydraulique est typiquement du type pour circuit ouvert, à cylindrée variable, unidirectionnelle, à commande de cylindrée asservie à une consigne de pression. Une telle pompe hydraulique est communément désignée sous l'appellation en langue anglaise « load-sensing pump ».

Le distributeur trois positions est typiquement une valve de contrôle directionnelle 5 voies 3 positions faisant inverseur de sens.

Selon un exemple, le distributeur trois positions présente :
- un premier orifice relié à la pompe hydraulique via le variateur de débit,
- un deuxième orifice relié au réservoir,
- un troisième orifice relié à un premier orifice du moteur hydraulique,
- un quatrième orifice relié au réservoir, et
- un cinquième orifice relié à un second orifice du moteur hydraulique,
et dans lequel la deuxième position relie le premier orifice au deuxième orifice, et relie le troisième orifice au quatrième orifice et au cinquième orifice.

Selon un exemple, le variateur de débit est un distributeur deux voies deux positions, présentant une première position dans lequel il permet un passage de fluide, et une seconde position dans laquelle il se trouve par défaut, dans laquelle il prévient un passage de fluide de la pompe hydraulique vers le distributeur trois positions.

Selon un exemple, le variateur de débit est une valve proportionnelle.

Selon un exemple, le variateur de débit est configuré de manière à permettre un passage de fluide lorsque le distributeur trois positions est positionné dans sa première position ou dans sa troisième position.

Selon un exemple, le moteur hydraulique est un moteur hydraulique à pistons radiaux et came multilobes.

Le moteur hydraulique est typiquement un moteur hydraulique à pistons rétractables ; les pistons du moteur hydraulique peuvent être rétractés dans des logements, de manière à réduire ou annuler la cylindrée dudit moteur hydraulique.

Selon un exemple, le deuxième orifice du distributeur trois positions est relié au réservoir via un premier conduit de retour, le carter du moteur hydraulique est relié au réservoir via un second conduit de retour, lesdits conduits de retour étant munis de clapets anti retour tarés respectivement à des pressions de tarage P64 et P62 telles que P64>P62, le premier conduit de retour et le second conduits de retour étant reliés par une restriction (60) en amont desdits clapets anti retour tarés.

Selon un exemple, le système est configuré de manière à réaliser une temporisation entre un arrêt de pilotage du distributeur trois positions et un arrêt de pilotage du variateur de débit.

Le présent exposé concerne également un véhicule comprenant un système d'assistance tel que défini précédemment.

Le présent exposé concerne également un procédé de pilotage d'un système tel que défini précédemment, dans lequel pour désengager l'assistance à l'entrainement, on bascule le distributeur trois positions dans sa seconde position, puis après exécution d'une temporisation, on bascule le variateur de débit de manière à ce qu'il empêche un passage de fluide depuis la pompe hydraulique vers le distributeur trois positions.

Le système d'assistance tel que proposé permet de réaliser un système d'entrainement des roues non motrices d'un véhicule, par exemple des roues d'un attelage ou d'une remorque, ou des roues porteuses, ou des roues porteuses et directrices, ou un essieu relevable, qui peuvent ainsi être sélectivement entrainées par le système d'assistance, par exemple pour des conditions spécifiques ou pour le franchissement d'obstacles. Les roues non motrices sont des roues qui sont normalement porteuses sur le véhicule, et les roues motrices sont celles qui sont entrainées normalement par la transmission mécanique. L'assistance à la traction est un système complémentaire qui est soit utilisé dans une plage de vitesse réduite, soit temporairement. L'assistance est utilisée seule, ou en parallèle avec la transmission mécanique.

### Brève description des dessins

L'invention et ses avantages seront mieux compris à la lecture de la description détaillée faite ci-après de différents modes de réalisation de l'invention donnés à titre d'exemples non limitatifs.
[Fig. 1] la figure 1 représente schématiquement un circuit hydraulique selon un aspect de l'invention dans une configuration que l'on qualifie de repos ou de désengagement.
[Fig. 2] la figure 2 représente le même circuit dans une configuration d'assistance.

Les éléments en commun sur les figures sont repérés par des références numériques identiques.

### Description des modes de réalisation

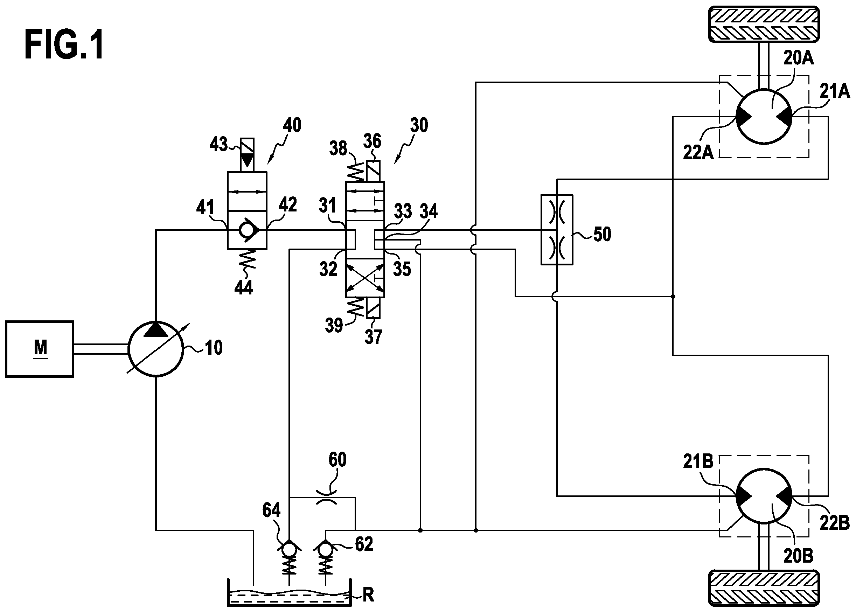

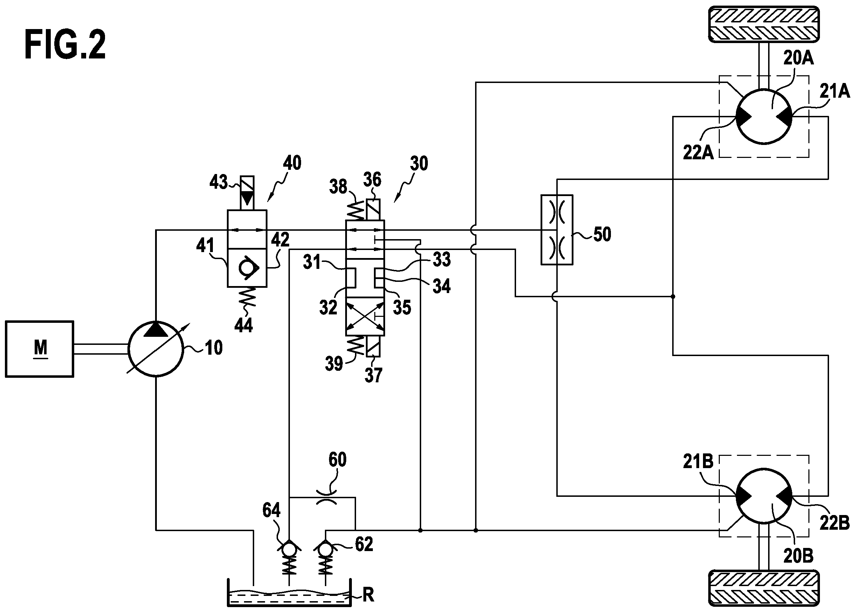

Les figures 1 et 2 présentent schématiquement un circuit hydraulique selon un aspect de l'invention selon deux configurations que l'on détaillera par la suite.

On représente sur ces figures un moteur M entrainant une machine hydraulique 10 réalisant ici une fonction de pompe hydraulique. On la désignera ainsi par la suite comme étant la pompe hydraulique 10. Le moteur M est typiquement un moteur thermique, ou tout autre type de moteur réalisant l'entrainement d'un essieu d'un véhicule, par exemple un camion ou en engin agricole, de manutention ou de chantier.

La pompe hydraulique 10 est une pompe hydraulique à cylindrée variable, et est adaptée de manière à réguler automatiquement sa cylindrée afin de maintenir une pression en sortie de la pompe hydraulique 10. Une telle pompe est communément désignée par l'appellation en langue anglaise de pompe « load-sensing ». De telles pompes hydrauliques sont typiquement à un seul sens de débit pour les entrainements en circuit ouvert, et nécessitent ainsi d'être associées à des valves directionnelles pour alimenter des organes, et/ou à des valves directionnelles d'inversion de sens pour alimenter des organes dont le sens d'entrainement peut être inversé. Le fonctionnement d'une telle pompe hydraulique 10 est bien connu, de même que les éléments assurant la fonction de régulation de la cylindrée de la pompe hydraulique 10. Une telle pompe hydraulique 10 est ainsi commandée en pression. Elle comprend un dispositif interne modulant sa cylindrée de manière à atteindre la consigne de pression à sa sortie, le pilotage en cylindrée étant réalisé par exemple au moyen d'une boucle de rétroaction. La pompe hydraulique 10 module ainsi sa cylindrée ; elle l'augmente lorsque la pression de sortie est inférieure à la consigne de pression, et la diminue lorsque la pression de sortie est supérieure à la consigne de pression. De telles pompes hydrauliques peuvent typiquement atteindre une cylindrée nulle, et une cylindrée maximale pouvant aller jusqu'à 600 bar. De telles pompes hydrauliques ont communément une consigne minimale, par exemple comprise entre 20 et 30 bar. Elles peuvent être configurées de manière à appliquer cette consigne minimale en l'absence de consigne spécifique. La consigne minimale peut être typiquement réalisée par la configuration mécanique du contrôle de cylindrée de pompe, et s'applique en l'absence de signal reçu par la pompe. La consigne de pression peut être une consigne fixe ou variable. Le circuit hydraulique associé à une telle pompe hydraulique 10 est un circuit hydraulique du type ouvert.

La pompe hydraulique 10 prélève un fluide, typiquement de l'huile, dans un réservoir R, et délivre un débit de fluide dans un circuit hydraulique ouvert, de manière à sélectivement alimenter un ou plusieurs moteurs hydrauliques 20, ici deux moteurs hydrauliques 20A et 20B pouvant chacun entrainer en rotation une roue de véhicule. Les moteurs hydrauliques présentent chacun un carter relié au réservoir R. Dans l'exemple illustré, un diviseur de débit 50, dont la structure est bien connue de l'homme du métier, répartit le débit entre les deux moteurs hydrauliques 20A et 20B.

Bien que ces figures présentent une structure de circuit avec deux moteurs hydrauliques, on comprend que le présent exposé concerne un circuit présentant un nombre quelconque de moteurs hydrauliques. On fera par la suite référence au moteur hydraulique 20, désignant les moteurs hydrauliques du circuit hydraulique, le cas échéant associés à un répartiteur de débit ou à un diviseur de débit.

Les moteurs hydrauliques 20 sont typiquement des moteurs hydrauliques à pistons radiaux et came multilobes, dont la structure est bien connue de l'homme du métier.

On définit de manière générale dans le circuit hydraulique :
- un conduit d'admission, reliant le réservoir R à la pompe hydraulique 10,
- un conduit d'alimentation reliant la pompe hydraulique 10 au moteur hydraulique 20, et
- un conduit de retour, reliant le moteur hydraulique 20 au réservoir R.

La liaison entre la pompe hydraulique 10 et les moteurs hydrauliques 20 est assurée au moyen d'un distributeur trois positions 30 à centre ouvert, qui est positionné dans le conduit d'alimentation.

Le distributeur trois positions 30 présente cinq orifices :
- un premier orifice 31 relié à la pompe hydraulique 10,
- un deuxième orifice 32 relié au réservoir R,
- un troisième orifice 33 relié à un premier orifice 21 du moteur hydraulique 20,
- un quatrième orifice 34 relié au réservoir R, et
- un cinquième orifice 35 relié à un second orifice 22 du moteur hydraulique 20.

Dans l'exemple illustré, les carters des moteurs hydrauliques 20 sont reliés au réservoir R via un conduit commun avec celui reliant le quatrième orifice 34 du distributeur trois positions 30 au réservoir R. On comprend cependant que ce mode de réalisation n'est pas limitatif ; les carters des moteurs hydrauliques 20 d'une part et le quatrième orifice 34 du distributeur trois positions 30 d'autre part peuvent être reliés au réservoir R via des conduits distincts. Plus particulièrement, le quatrième orifice 34 du distributeur trois positions 30 peut être relié directement au réservoir R, indépendamment des carters des moteurs hydrauliques 20.

Dans une première position, le premier orifice 31 est relié au troisième orifice 33, le deuxième orifice 32 est relié au cinquième orifice, et le quatrième orifice 34 est obturé. Cette première position relie ainsi la pompe hydraulique 10 au moteur hydraulique 20, et permet ainsi de réaliser un entrainement du moteur hydraulique 20 selon un premier sens de fonctionnement.

Dans une deuxième position, le premier orifice 31 est relié au deuxième orifice 32, le troisième orifice 33, le quatrième orifice 34 et le cinquième orifice 35 sont reliés. Cette position correspond à un fonctionnement en roue libre du moteur hydraulique 20, dont les deux orifices 21 et 22, c'est-à-dire l'admission et le refoulement, sont reliés au réservoir R.

Dans une troisième position, le premier orifice 31 est relié au cinquième orifice 35, le deuxième orifice 32 est relié au troisième orifice 33, et le quatrième orifice est obturé. Cette troisième position relie ainsi la pompe hydraulique 10 au moteur hydraulique 20, et permet ainsi de réaliser un entrainement du moteur hydraulique 20 selon un second sens de fonctionnement, inversé par rapport au premier sens de fonctionnement obtenu grâce à la première position.

Le distributeur trois positions 30 est piloté via des commandes 36 et 37 couplées à des moyens de rappel 38 et 39. Les commandes 36 et 37 sont typiquement des commandes pneumatiques ou électriques. Les moyens de rappel 38 et 39 sont typiquement des moyens de rappel élastiques tels que des ressorts. Le distributeur trois positions 30 est typiquement par défaut (c'est-à-dire en l'absence d'application d'une commande) dans la seconde position, et l'activation des commandes 36 ou 37 permet de le faire basculer dans la première position ou dans la troisième position.

Le fonctionnement du distributeur trois positions 30 est connu. Lorsque l'assistance hydraulique est sollicitée, le distributeur trois positions 30 bascule dans sa première position ou dans sa troisième position (via les commandes 36 ou 37) afin d'alimenter les moteurs hydrauliques 20. Lorsque l'assistance hydraulique n'est pas sollicitée, le distributeur trois positions 30 revient dans sa deuxième position, et les moteurs hydrauliques 20 sont alors reliés au réservoir R, donc à pression ambiante.

Comme déjà indiqué en introduction du présent exposé, une problématique découlant de l'utilisation du distributeur trois positions 30 à centre ouvert est que lorsque le distributeur trois positions 30 est dans sa deuxième position, la pompe hydraulique 10 délivre un débit dans le réservoir R. La pompe hydraulique 10, qui est une pompe hydraulique à cylindrée variable, unidirectionnelle, à commande de cylindrée asservie à une consigne de pression, va essayer d'atteindre sa pression de consigne, typiquement sa pression de consigne minimale, par exemple comprise entre 20 et 30 bar, et donc automatiquement monter en cylindrée en essayant d'établir une pression dans le réservoir R, et va ainsi débiter a pleine cylindrée, ce qui entraine donc une dépense d'énergie inutile dans le système.

Afin de prévenir une telle montée en cylindrée de la pompe hydraulique 10 lorsque le distributeur trois positions 30 est dans sa deuxième position, le système d'assistance comprend un variateur de débit 40 positionné entre la pompe hydraulique 10 et le premier orifice 31 du distributeur trois positions 30.

Dans l'exemple illustré, le variateur de débit 40 est un distributeur deux voies deux positions normalement fermé, présentant un premier orifice 41 relié à la pompe hydraulique 10, et un second orifice 42 relié au premier orifice 31 du distributeur trois positions 30. Le variateur de débit 40 est ici piloté par une commande 43, typiquement pneumatique ou électrique, à laquelle s'oppose un élément de rappel 44, typiquement un moyen de rappel élastique tel qu'un ressort. Le variateur de débit 40 alterne ici entre deux positions ; une première position, dans laquelle il se trouve par défaut, dans laquelle il empêche un passage de fluide de son second orifice 42 vers son premier orifice 41, et une seconde position dans laquelle il est passant, c'est-à-dire que le fluide peut passer librement entre son premier orifice 41 et son second orifice 42. Le variateur de débit 40 peut également être un distributeur à quatre voies et deux positions normalement fermé. Par « normalement fermé », on désigne un distributeur qui dans sa configuration par défaut est fermé, c'est-à-dire qu'il ne permet pas un passage de fluide.

Dans l'exemple illustré, le variateur de débit 40 est un distributeur tout ou rien ; c'est-à-dire qu'il bascule entre la première position dans laquelle il bloque le passage de fluide depuis la pompe hydraulique 10 vers le distributeur trois positions 30 et la seconde position dans laquelle il permet un passage de fluide avec un débit maximum entre la pompe hydraulique 10 et le distributeur trois positions 30.

En variante, le variateur de débit 40 est un distributeur proportionnel. Une telle variante permet d'éviter la génération de pics de pression dans le circuit hydraulique lorsque le variateur de débit 40 passe de sa première position à sa seconde position.

Le variateur de débit 40 est typiquement piloté de manière à basculer dans sa seconde position lorsque l'assistance hydraulique est sollicitée, et donc typiquement lorsque le distributeur trois positions 30 bascule dans sa première position ou dans sa troisième position, ou après l'exécution d'une temporisation suite au basculement du distributeur trois positions 30 dans sa première position ou dans sa troisième position.

Lorsque l'on souhaite désengager l'assistance hydraulique, on pilote typiquement le variateur de débit 40 de manière à le ramener dans sa première position. L'alimentation en fluide du moteur hydraulique 20 est alors coupée. La pression à l'admission et au refoulement du moteur hydraulique 20 chute, alors que la pression dans le carter du moteur hydraulique 20 augmente, ce qui entraine une mise en roue libre du moteur hydraulique 20 par retrait des pistons dans leurs logements. Le distributeur trois positions 30 est ensuite typiquement ramené dans sa deuxième position.

Le variateur de débit 40 et le distributeur trois positions 30 sont typiquement pilotés au moyen d'un contrôleur, par exemple une unité de contrôle électronique, ou « ECU » selon l'acronyme communément employé.

Le système proposé comprend également une restriction 60 (également désignée par limiteur de débit ou gicleur) reliant deux conduits de retour. Plus précisément, le système comprend une restriction 60 un premier conduit de retour reliant le second orifice 32 du distributeur trois positions 30 au réservoir R, et un second conduit de retour reliant les carters des moteurs hydrauliques 20 au réservoir R. Ces deux conduits de retour sont munis de clapets anti retour tarés, respectivement 64 et 62. On comprend que l'invention ne se limite pas précisément à de tels composants ; le système peut présenter des moyens équivalents réalisant les fonctions de la restriction 60 et des clapets anti retour tarés 64 et 62.

Comme indiqué précédemment la figure 1 représente le système en configuration de repos ou en configuration de désengagement, tandis que la figure 2 représente le système en fonctionnement, c'est-à-dire lorsque l'assistance hydraulique est en fonctionnement.

En référence à la figure 2, on voit ici que la pompe hydraulique 10 alimente les moteurs hydrauliques 20 ; le variateur de débit 40 est passant, le distributeur trois positions 30 également. On note qu'un fonctionnement similaire mais en sens inverse peut être obtenu avec le distributeur trois positions 30 dans sa troisième configuration telle que décrite précédemment.

Lors du désengagement de l'assistance hydraulique, on cesse dans un premier temps de piloter le distributeur trois positions 30 ; ce dernier bascule donc dans sa configuration par défaut, c'est-à-dire dans sa deuxième configuration telle que décrite précédemment. Le débit délivré par la pompe hydraulique 10 est alors dirigé vers le réservoir R. Cependant, la présence du clapet anti retour taré 64 et de la restriction 60 va entrainer une déviation d'une partie du débit vers le second conduit de retour, et va donc entrainer une montée en pression dans les carters des moteurs hydrauliques 20, ce qui contribue à réaliser un retrait des pistons des moteurs hydrauliques 20 dans leurs logements, et donc une mise à cylindrée nulle des moteurs hydrauliques 20. L'excédent du débit est dirigé vers le réservoir R via le clapet anti retour taré 62. Les clapets anti retour tarés 64 et 62 sont typiquement configurés de manière à être passants uniquement dans un sens (en direction du réservoir R) lorsque la pression qui est appliquée est supérieure à une valeur seuil, respectivement P64 et P62. Ces valeurs seuils de pression P64 et P62 sont typiquement telles que P64>P62. A titre d'exemple, P64 peut être égal à 3 bar, tandis que P51 peut être égal à 1,5 bar. Les clapets tarés 62 et 64 peuvent être remplacés par d'autres moyens permettant d'atteindre ces pressions, par exemple des restrictions ou diaphragmes, ou une longueur de conduite de section réduite, qui permet d'obtenir ces pression en débit type de la conduite dans ces conditions d'usage. Afin d'éviter que le débit atteigne l'alimentation des moteurs hydrauliques 20, le conduit reliant le quatrième orifice 34 du distributeur trois positions 30 au réservoir R est typiquement disjoint du conduit reliant les carters des moteurs hydrauliques 20 au réservoir R, ou est muni d'un clapet anti retour qui ne permet le passage du fluide que dans le sens allant du quatrième orifice 34 du distributeur trois positions 30 vers le réservoir R.

Ensuite, le variateur de débit 40 est désengagé ; il bascule dans sa configuration par défaut (telle que représentée sur la figure 1), dans laquelle il n'est pas passant. La pompe hydraulique 10 réduit alors sa cylindrée qui va tendre vers 0 ou être nulle. En effet, l'orifice 41 en sortie de la pompe hydraulique 10 étant obturé, la pression en sortie de la pompe hydraulique 10 va monter jusqu'à atteindre la valeur de consigne de la pompe hydraulique 10, qui peut être sa consigne minimale, par exemple 20 ou 30 bar. Cette dernière va alors moduler sa cylindrée pour la réduire jusqu'à la faire tendre vers zéro ou être nulle, dans la mesure où la pression de consigne en sortie de la pompe hydraulique 10 est alors atteindre. Le système est alors en configuration de repos. Une temporisation est typiquement effectuée entre l'arrêt du pilotage du distributeur trois positions 30 et l'arrêt du pilotage du variateur de débit 40, afin d'assurer le retrait des pistons des moteurs hydrauliques 20 dans leurs logements.

Pour les véhicules ou la pompe hydraulique 10 est une pompe dédiée à des accessoires hydrauliques à usage temporaire, tels qu'une grue de chargement, on peut disposer un embrayage entre le moteur thermique M et la pompe hydraulique 10, typiquement placé sur une prise de force de type PTO du moteur M (typiquement un moteur thermique). L'étape d'engagement peut être précédée d'un embrayage de la pompe hydraulique 10 sur la prise de force du moteur M, ce qui la met en rotation. La valve 40 permet avantageusement de garder la pompe hydraulique 10 en état de veille à cylindrée réduite, ce qui crée un état d'attente économique. L'étape de désengagement peut être suivie d'une étape de débrayage de la pompe hydraulique 10. Cependant, on peut prévoir une période d'utilisation longue de la pompe hydraulique 10, et la conserver en état de veille, entre deux demandes d'assistance. Dans cet état de veille, l'état désengagé est maintenu ce qui permet de limiter l'usure de l'embrayage, et garder la pompe hydraulique 10 en état de veille à cylindrée réduite, dans un état d'attente économique.

Le système proposé permet ainsi de cumuler les avantages d'un distributeur à centre ouvert et d'un distributeur à centre fermé, tout en s'affranchissant de leurs inconvénients. Le variateur de débit permet en effet de piloter la cylindrée de la pompe hydraulique 10 afin de réaliser une montée en cylindrée lorsque l'assistance hydraulique est sollicitée, ou une baisse de cylindrée lorsque l'assistance hydraulique n'est pas engagée. Le système proposé permet ainsi de minimiser voire de supprimer la consommation d'énergie par la pompe hydraulique 10 lorsque l'assistance hydraulique est désengagée grâce à l'ajout du variateur de débit 40 à centre fermé, tout en bénéficiant de la fonction du distributeur trois positions 30 à centre ouvert, notamment pour permettre le désengagement des moteurs hydrauliques 20 lorsque l'assistance hydraulique est désengagée, et de permettre de réaliser une mise en cylindrée des moteurs hydrauliques 20 lorsque l'assistance hydraulique est sollicitée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Système d'assistance à l'entrainement d'un véhicule muni d'un circuit hydraulique ouvert comprenant une pompe hydraulique (10), un moteur hydraulique (20) et un réservoir (R), le circuit hydraulique comprenant un conduit d'admission reliant le réservoir (R) à la pompe hydraulique (10), un conduit d'alimentation reliant la pompe hydraulique (10) au moteur hydraulique (20), et un conduit de retour reliant le moteur hydraulique (20) au réservoir (R),
ledit système comprenant un distributeur trois positions (30) relié au conduit d'alimentation et au conduit de retour, adapté pour, dans une première position assurer l'alimentation du moteur hydraulique (20) dans un premier sens de fonctionnement, dans une seconde position isoler fluidiquement le moteur hydraulique (20) de la pompe hydraulique (10) et relier le moteur hydraulique (20) au réservoir (R), et dans une troisième position assurer l'alimentation du moteur hydraulique (20) dans un second sens de fonctionnement opposé au premier sens de fonctionnement,
ledit système étant **caractérisé en ce que**
la pompe hydraulique (10) est une pompe hydraulique à cylindrée variable, unidirectionnelle, à commande de cylindrée asservie à une consigne de pression
le système comprend un variateur de débit (40) positionné sur le conduit d'alimentation, entre la pompe hydraulique (10) et le distributeur trois positions (30), ledit variateur de débit (40) étant configuré de manière à dans une première configuration empêcher un passage de fluide dans le conduit d'alimentation de la pompe hydraulique (10) vers le distributeur trois positions (30) de manière à ce que la cylindrée de la pompe hydraulique (10) tende vers zéro ou soit nulle, et dans une seconde configuration, permettre un passage de fluide dans le conduit d'alimentation de la pompe hydraulique (10) vers le distributeur trois positions (30).

2. Système selon la revendication 1, dans lequel le distributeur trois positions (30) présente :
- un premier orifice (31) relié à la pompe hydraulique (10) via le variateur de débit (40),
- un deuxième orifice (32) relié au réservoir (R),
- un troisième orifice (33) relié à un premier orifice (21) du moteur hydraulique (20),
- un quatrième orifice (34) relié au réservoir (R), et
- un cinquième orifice (35) relié à un second orifice (22) du moteur hydraulique (20),
et dans lequel la deuxième position relie le premier orifice (31) au deuxième orifice (32), et relie le troisième orifice (33) au quatrième orifice (34) et au cinquième orifice (35).

3. Système selon l'une des revendications 1 ou 2, dans lequel le variateur de débit (40) est un distributeur deux positions, présentant une première position dans lequel il permet un passage de fluide, et une seconde position dans laquelle il prévient un passage de fluide de la pompe hydraulique (10) vers le distributeur trois positions (30).

4. Système selon l'une des revendications 1 ou 2, dans lequel le variateur de débit (40) est une valve proportionnelle.

5. Système selon l'une des revendications 1 à 4, dans lequel le variateur de débit (40) est configuré de manière à permettre un passage de fluide lorsque le distributeur trois positions (30) est positionné dans sa première position ou dans sa troisième position.

6. Système selon l'une des revendications 1 à 5, dans lequel le moteur hydraulique (20) est un moteur hydraulique à pistons radiaux et came multilobes.

7. Système selon la revendication 6, dans lequel les pistons du moteur hydraulique (20) peuvent être rétractés dans des logements, de manière à réduire ou annuler la cylindrée dudit moteur hydraulique (20).

8. Système selon l'une des revendications 1 à 7, dans lequel le deuxième orifice (32) du distributeur trois positions (30) est relié au réservoir (R) via un premier conduit de retour, le carter du moteur hydraulique (20) est relié au réservoir (R) via un second conduit de retour, lesdits conduits de retour étant munis de clapets anti retour tarés (64, 62) respectivement à des pressions de tarage P64 et P62 telles que P64>P62, le premier conduit de retour et le second conduits de retour étant reliés par une restriction (60) en amont desdits clapets anti retour tarés (64, 62).

9. Système selon l'une des revendications 1 à 8, configuré de manière à réaliser une temporisation entre un arrêt de pilotage du distributeur trois positions (30) et un arrêt de pilotage du variateur de débit (40).

10. Véhicule comprenant un système d'assistance selon l'une des revendications précédentes.

11. Procédé de pilotage d'un système selon l'une des revendications 1 à 9, dans lequel pour désengager l'assistance à l'entrainement, on bascule le distributeur trois positions (30) dans sa seconde position, puis après exécution d'une temporisation, on bascule le variateur de débit (40) de manière à ce qu'il empêche un passage de fluide depuis la pompe hydraulique (10) vers le distributeur trois positions (30).

## Patentansprüche

1. Hilfssystem für den Antrieb eines Fahrzeugs, das mit einem offenen Hydraulikkreis versehen ist, der eine Hydraulikpumpe (10), einen Hydraulikmotor (20) und einen Behälter (R) umfasst, wobei der Hydraulikkreis eine Einlassleitung, die den Behälter (R) mit der Hydraulikpumpe (10) verbindet, eine Versorgungsleitung, welche die Hydraulikpumpe (10) mit dem Hydraulikmotor (20) verbindet, und eine Rückleitung umfasst, die den Hydraulikmotor (20) mit dem Behälter (R) verbindet,
wobei das System einen Drei-Positionen-Verteiler (30) umfasst, der mit der Versorgungsleitung und mit der Rückleitung verbunden ist und so gestaltet ist, dass er in einer ersten Position die Versorgung des Hydraulikmotors (20) in einer ersten Betriebsrichtung sicherstellt, in einer zweiten Position den Hydraulikmotor (20) von der Hydraulikpumpe (10) fluidisch isoliert und den Hydraulikmotor (20) mit dem Behälter (R) verbindet und in einer dritten Position die Versorgung des Hydraulikmotors (20) in einer zweiten Betriebsrichtung entgegengesetzt zu der ersten Betriebsrichtung sicherstellt,
wobei das System **dadurch gekennzeichnet ist, dass**
die Hydraulikpumpe (10) eine unidirektionale Hydraulikpumpe mit veränderlichem Hubraum mit auf einen Drucksollwert geregelter Hubraumsteuerung ist,
das System einen Durchflussregler (40) umfasst, der auf der Versorgungsleitung zwischen der Hydraulikpumpe (10) und dem Drei-Positionen-Verteiler (30) positioniert ist, wobei der Durchflussregler (40) derart ausgestaltet ist, dass er in einer ersten Ausgestaltung einen Durchgang von Fluid in der Versorgungsleitung von der Hydraulikpumpe (10) hin zu dem Drei-Positionen-Verteiler (30) verhindert, derart dass der Hubraum der Hydraulikpumpe (10) gegen null tendiert oder gleich null ist, und in einer zweiten Ausgestaltung einen Durchgang von Fluid in der Versorgungsleitung von der Hydraulikpumpe (10) hin zu dem Drei-Positionen-Verteiler (30) ermöglicht.

2. System nach Anspruch 1, wobei der Drei-Positionen-Verteiler (30) aufweist:
- eine erste Öffnung (31), die mit der Hydraulikpumpe (10) über den Durchflussregler (40) verbunden ist,
- eine zweite Öffnung (32), die mit dem Behälter (R) verbunden ist,
- eine dritte Öffnung (33), die mit einer ersten Öffnung (21) des Hydraulikmotors (20) verbunden ist,
- eine vierte Öffnung (34), die mit dem Behälter (R) verbunden ist, und
- eine fünfte Öffnung (35), die mit einer zweiten Öffnung (22) des Hydraulikmotors (20) verbunden ist,
und wobei die zweite Position die erste Öffnung (31) mit der zweiten Öffnung (32) verbindet und die dritte Öffnung (33) mit der vierten Öffnung (34) und mit der fünften Öffnung (35) verbindet.

3. System nach einem der Ansprüche 1 oder 2, wobei der Durchflussregler (40) ein Zwei-Positionen-Verteiler ist, der eine erste Position, in der er einen Durchgang von Fluid erlaubt, und eine zweite Position aufweist, in der er einen Durchgang von Fluid von der Hydraulikpumpe (10) hin zu dem Drei-Positionen-Verteiler (30) verhindert.

4. System nach einem der Ansprüche 1 oder 2, wobei der Durchflussregler (40) ein Proportionalventil ist.

5. System nach einem der Ansprüche 1 bis 4, wobei der Durchflussregler (40) derart ausgestaltet ist, dass er einen Durchgang von Fluid erlaubt, wenn der Drei-Positionen-Verteiler (30) in seiner ersten Position oder in seiner dritten Position positioniert ist.

6. System nach einem der Ansprüche 1 bis 5, wobei der Hydraulikmotor (20) ein Hydraulikmotor mit Radialkolben und mehrlappigem Nocken ist.

7. System nach Anspruch 6, wobei die Kolben des Hydraulikmotors (20) derart in Aufnahmen eingezogen werden können, dass der Hubraum des Hydraulikmotors (20) vermindert oder aufgehoben wird.

8. System nach einem der Ansprüche 1 bis 7, wobei die zweite Öffnung (32) des Drei-Positionen-Verteilers (30) mit dem Behälter (R) über eine erste Rückleitung verbunden ist, das Gehäuse des Hydraulikmotors (20) mit dem Behälter (R) über eine zweite Rückleitung verbunden ist und die Rückleitungen mit Rückschlagventilen (64, 62) versehen sind, die auf Tarierungsdrücke P64 beziehungsweise P62, wie beispielsweise P64 > P62, tariert sind, wobei die erste Rückleitung und die zweite Rückleitung durch eine Drosselung (60) stromaufwärts der tarierten Rückschlagventile (64, 62) verbunden sind.

9. System nach einem der Ansprüche 1 bis 8, das derart ausgestaltet ist, dass eine Verzögerung zwischen einem Steuerungsstopp des Drei-Positionen-Verteilers (30) und einem Steuerungsstopp des Durchflussreglers (40) ausgeführt wird.

10. Fahrzeug, das ein Hilfssystem nach einem der vorhergehenden Ansprüche umfasst.

11. Verfahren zur Steuerung eines Systems nach einem der Ansprüche 1 bis 9, wobei zum Ausschalten der Antriebshilfe der Drei-Positionen-Verteiler (30) in seine zweite Position gekippt wird und dann nach Ausführung einer Verzögerung der Durchflussregler (40) gekippt wird, derart dass er einen Durchgang von Fluid von der Hydraulikpumpe (10) hin zu dem Drei-Positionen-Verteiler (30) verhindert.

## Claims

1. A vehicle drive assistance system equipped with an open hydraulic circuit comprising a hydraulic pump (10), a hydraulic motor (20) and a reservoir (R), the hydraulic circuit comprising an intake duct connecting the reservoir (R) to the hydraulic pump (10), a supply duct connecting the hydraulic pump (10) to the hydraulic motor (20), and a return duct connecting the hydraulic motor (20) to the reservoir (R),
said system comprising a three-position valve (30) connected to the supply duct and to the return duct, suitable for, in a first position supplying the hydraulic motor (20) in a first direction of operation, in a second position fluidly isolating the hydraulic motor (20) from the hydraulic pump (10) and connecting the hydraulic motor (20) to the reservoir (R), and in a third position supplying the hydraulic motor (20) in a second direction of operation opposite to the first direction of operation,
said system being **characterized in that**
the hydraulic pump (10) is a variable-displacement hydraulic pump, unidirectional, with displacement control slaved to a pressure setpoint the system comprises a flow controller (40) positioned on the supply duct, between the hydraulic pump (10) and the three-position valve (30), said flow controller (40) being configured in such a way as to, in a first configuration, prevent the passage of fluid through the supply duct of the hydraulic pump (10) toward the three-position valve (30) in such a way that the displacement of the hydraulic pump (10) tends to zero or is null, and in a second configuration, allowing the passage of fluid through the supply duct of the hydraulic pump (10) toward the three-position valve (30).

2. The system as claimed in claim 1, wherein the three-position valve (30) has:
- a first orifice (31) connected to the hydraulic pump (10) via the flow controller (40),
- a second orifice (32) connected to the reservoir (R),
- a third orifice (33) connected to a first orifice (21) of the hydraulic motor (20),
- a fourth orifice (34) connected to the reservoir (R), and
- a fifth orifice (35) connected to a second orifice (22) of the hydraulic motor (20),
and wherein the second position connects the first orifice (31) to the second orifice (32), and connects the third orifice (33) to the fourth orifice (34) and to the fifth orifice (35).

3. The system as claimed in one of claims 1 or 2, wherein the flow controller (40) is a two-position valve, having a first position wherein it allows the passage of fluid, and a second position wherein it prevents the passage of fluid from the hydraulic pump (10) toward the three-position valve (30).

4. The system as claimed in one of claims 1 or 2, wherein the flow controller (40) is a proportional valve.

5. The system as claimed in one of claims 1 to 4, wherein the flow controller (40) is configured in such a way as to allow the passage of fluid when the three-position valve (30) is positioned in its first position or in its third position.

6. The system as claimed in one of claims 1 to 5, wherein the hydraulic motor (20) is a hydraulic motor with radial pistons and multi-lobe cam.

7. The system as claimed in claim 6, wherein the pistons of the hydraulic motor (20) can be retracted into housings, in such a way as to reduce or eliminate the displacement of said hydraulic motor (20).

8. The system as claimed in one of claims 1 to 7, wherein the second orifice (32) of the three-position valve (30) is connected to the reservoir (R) via a first return duct, the casing of the hydraulic motor (20) is connected to the reservoir (R) via a second return duct, said return ducts being equipped with check valves (64, 62) tared respectively at tare pressures P64 and P62 such that P64>P62, the first return duct and the second return duct being connected by a choke (60) upstream of said tared check valves (64, 62).

9. The system as claimed in one of claims 1 to 8, configured in such a way as to provide a time delay between the shutoff of the control of the three-position valve (30) and the shutoff of the control of the flow controller (40).

10. A vehicle comprising an assistance system as claimed in one of the preceding claims.

11. A method for controlling a system as claimed in one of claims 1 to 9, wherein to disengage the drive assistance, the three-position valve (30) is toggled to its second position, then after executing a time delay, the flow controller (40) is toggled in such a way that it prevents the passage of fluid from the hydraulic pump (10) toward the three-position valve (30).
